# EUROPÄISCHE PATENTANMELDUNG

(11) **EP 2 833 296 A1**
(43) Veröffentlichungstag der Anmeldung: **04.02.2015**
(21) Anmeldenummer: 13178716.0
(22) Anmeldetag: 31.07.2013
(51) Int. Cl.: G06K 19/07, G06K 19/077, G09F 3/20

(54) **Etikette zur optischen Darstellung wechselnder Informationen**

(71) Anmelder: Siemens Aktiengesellschaft, 80333 München (DE)
(72) Erfinder: Meyer, Heinrich, 90530 Wendelstein (DE)

(57) **Zusammenfassung**

Die Erfindung betrifft eine Etikette (E) zur optischen Darstellung wechselnder Informationen, insbesondere von elektronischen Produktinformationen, mit einer passiven optoelektronischen Anzeigevorrichtung (AV), wobei die passive Anzeigevorrichtung zur dauerhaften energielosen Aufrechterhaltung einer dargestellten Information eingerichtet ist, mit einer Steuerungseinrichtung zur Bereitstellung geänderter Informationen für die Anzeigevorrichtung (AV). Dabei ist die Steuerungseinrichtung nach Art eines RFID-Transponders zum Empfang der darzustellenden Informationen von einem Schreib-/Lesegerät eingerichtet, wobei die Etikette (E) mittels zumindest eines Energiespeichers (ES), der aus einem empfangenen Wechselfeld aufladbar ist, mit Energie versorgbar ist. Eine solche Etikette ist extrem langlebig, weil keine Speicherzelle, Akkumulator oder dergleichen ausgetauscht werden muss. Darüber hinaus sind die darzustellenden Informationen sowohl maschinell (mittels Kamera) als auch manuell (durch einen Betrachter) auslesbar. Eine solche Etikette kann auch beliebig oft wieder beschrieben werden.

## Beschreibung

Die Erfindung betrifft eine Etikette zur optischen Darstellung wechselnder Informationen gemäß dem Oberbegriff des Patentanspruchs 1.

In der Logistik industrieller Automatisierungseinrichtungen und Produktionsanlagen, in Warenwirtschaftssystemen, Gepäckförderanlagen, im Einzelhandel und auf vielen anderen Gebieten werden häufig maschinenlesbare Etiketten eingesetzt, beispielsweise Barcode-Etiketten aus bedrucktem Papier oder Kunststoff oder RFID-Transponder zum Auslesen per Funk. Jedes dieser Systeme hat seine spezifischen Vor- und Nachteile. Optische Datenträger, also bedruckte Etiketten, sind auch in Umgebungen mit Funkstörungen maschinell mit Kameras auslesbar und können weiterhin, sofern auch Klartext aufgedruckt ist, von Personen gelesen werden. Nachteilig ist dabei die erforderliche direkte Sichtverbindung zwischen Kamera und Etikette, und darüber hinaus eine Empfindlichkeit gegenüber Verschmutzungen, und das Erfordernis einer guten Ausleuchtung. Diese Nachteile weisen die funkbasierten RFID-Transponder zwar nicht auf, dafür ist jedoch eine gute Funkverbindung notwendig, außerdem können in Folge von Überreichweiten und dergleichen irrtümlich auch entferntere Transponder erfasst werden. Zudem sind die funkbasierten RFID-Transponder nicht "manuell" durch Personen auslesbar, die kein RFID-Schreib-/Lesegerät mit sich führen. Dagegen weisen die RFID-Transponder wiederum den Vorteil auf, dass diese wiederbeschreibbar sind, während die gedruckten Etiketten dies naturgemäß nicht sind.

Im Stand der Technik existieren einige Ansätze, um die zuvor beschriebenen Nachteile zumindest teilweise zu umgehen. So ist es beispielsweise möglich, die RFID-Transponder in eine Kunststoff- oder Papieretikette einzubetten, wobei dann ein elektronischer Produkt-Code oder eine andere Information, die auf dem RFID-Transponder gespeichert ist, zugleich auch in Form von Klartext oder in Form eines Barcodes oder eines anderen optisch / optoelektronisch auslesbaren Codes auf dieser Papieretikette aufgedruckt ist. Mit einer solchen Lösung sind schon fast alle geschilderten Nachteile bereinigt worden, bis auf die Wiederbeschreibbarkeit, die zumindest für den "optischen" Teil dieser Etikette, nämlich den Aufdruck, nicht gegeben ist.

Ein weiterer vielversprechender Ansatz besteht darin, ein elektronisches Display, beispielsweise ein LCD-Display oder TFT-Display, zur Markierung von Waren und Produkten zu verwenden, weil der Inhalt eines solchen elektronischen Displays änderbar ist, der Inhalt jedoch sowohl von Menschen als auch - im Falle einer maschinenlesbaren Darstellung - auch mit Geräten gelesen werden kann. Solche Etiketten finden sich beispielsweise auch an den Regalen von Supermärkten und dergleichen zur Anzeige von Preisen und Produktinformationen. Oft sind solche Etiketten auch mit drahtlosen Schnittstellen ausgerüstet, beispielweise Infrarot-Schnittstellen, um durch ein entsprechendes Steuergerät, beispielsweise einen Handheld-PC, die anzuzeigenden Informationen austauschen zu können. Bei der Verwendung von LCD-Displays wird in der Anzeige nur vergleichsweise wenig Energie verbraucht, so dass mit einer kleinen Primärbatterie (z.B. Knopfzelle) eine lange Betriebsdauer erreicht werden kann.

Eine Weiterentwicklung stellen Etiketten dar, die anstelle der beschriebenen LCD-Displays mit sogenannter "elektronischer" Tinte arbeiten, also einem Anzeigemedium, welches nur zum Wechsel der Informationen Energie benötigt, nicht jedoch zu deren Aufrechterhaltung. Die Druckschrift "Neues Super-Label vereint alle Vorteile von existierenden ID-Systemen" (IPH - Institut für Integrierte Produktion Hannover - gemeinnützige GmbH) zeigt eine solche Etikette, die mittels drahtlosem Zugriff durch eine Fotodiode ein entsprechendes Display unidirektional mit Informationen versorgen kann, die sowohl maschinenlesbar, als auch von Menschen lesbar sind. Da eine solche Etikette prinzipiell nur zum Wechsel der Informationen Energie benötigt, kann hier mittels einer Primärzelle eine besonders lange Betriebszeit erreicht werden.

Es ist eine Aufgabe der vorliegenden Erfindung, eine Etikette vorzuschlagen, welche in der Lage ist, ohne externe Spannungsversorgung und auch ohne Primärelement oder Akkumulator zuverlässig wechselnde Informationen visuell darzustellen.

Es ist eine Kernidee der erfindungsgemäßen Lösung dieser Aufgabe, ein sogenanntes "batterieloses Display", also eine Anzeigeeinrichtung mit elektronischer Tinte, mit einem RFID-Transponder oder einem ähnlichen Gerät zu kombinieren, wobei dieser RFID-Transponder bzw. das zu diesem RFID-Transponder ähnliche Gerät aus dem elektromagnetischen Feld des RFID-Schreib-/Lesegerätes mit Energie versorgt wird, wobei diese Art der Energieversorgung aus dem vom Schreib-/Lesegerät erzeugten Wechselfeld auch zur Versorgung der Anzeigeeinrichtung für den Wechsel der anzuzeigenden Informationen genutzt werden soll.

Die Aufgabe wird insbesondere durch eine Etikette gemäß dem Patentanspruch 1 gelöst.

Dabei wird eine Etikette zur optischen Darstellung wechselnder Informationen, insbesondere von elektronischen Produktinformationen, vorgeschlagen, mit einer passiven optoelektronischen Anzeigevorrichtung, wobei die passive Anzeigevorrichtung zur dauerhaften energielosen Aufrechterhaltung der Darstellung der Informationen eingerichtet ist, und mit einer Steuerungseinrichtung zur Bereitstellung geänderter Informationen für die Anzeigevorrichtung. Dabei ist die Steuerungseinrichtung nach Art eines RFID-Transponders zum Empfang der darzustellenden Informationen von einem Schreib-/Lesegerät eingerichtet, und die Etikette ist mittels zumindest eines Energiespeichers, der aus dem bei einem Zugriff auf die Steuerungseinrichtung empfangenen Wechselfeld aufladbar ist, drahtlos mit Energie versorgbar. Eine solche Etikette ist extrem langlebig, weil keine Primärzelle (Batterie), Akkumulator oder dergleichen ausgetauscht werden muss. Darüber hinaus sind die darzustellenden Informationen sowohl maschinell (mittels Kamera) als auch manuell (durch einen Betrachter) auslesbar. Eine solche Etikette kann auch beliebig oft wieder beschrieben werden.

Vorteilhafte Ausgestaltungen der erfindungsgemäßen Etikette sind in den abhängigen Patentansprüchen angegeben.

Vorteilhaft besteht die Anzeigevorrichtung im Wesentlichen aus einem elektronischen Papier, welches auch aus Anzeigevorrichtungen für elektronische Bücher und anderen Anwendungen bekannt ist. Dieses elektronische Papier, auch "E-Ink-Display" benannt, kann beispielsweise mikroskopisch kleine Kügelchen enthalten, welche zweifarbig (z.B. schwarz und weiß) eingefärbt sind, wobei diese Kügelchen in einem elektrischen Feld drehbar angeordnet sind. Nach einer entsprechenden Ausrichtung dieser Kügelchen und damit nach einer Bilderzeugung verbleiben diese Kügelchen in ihrem jeweils ausgerichteten Zustand, ohne dass weiterhin ein externes elektrisches Feld für den jeweiligen Bildpunkt angelegt werden muss. Solche oder ähnliche Technologien führen dazu, dass nur für eine Änderung eines Anzeigeinhaltes extern Energie zugeführt werden muss, nicht jedoch für die persistente Anzeige eines einmal definierten Bildinhaltes. Damit ergibt sich vorteilhafte der Effekt, dass nur dann Energie für die Anzeigevorrichtung benötigt wird, wenn die Steuerungseinrichtung ohnehin aus einem externen Feld mit Energie versorgt wird, also ein Energiespeicher (z.B. Kondensator) ohnehin aufgeladen worden ist.

Vorteilhaft ist die Steuerungseinrichtung der Etikette zum drahtlosen Datenaustausch mit einem Schreib-/Lesegerät mittels eines RFID-Protokolls eingerichtet. Somit können zum Definieren und zum Ändern des Anzeigeinhalts der Etikette gebräuchliche RFID-Schreib-/Lesegeräte eingesetzt werden, die zugleich auch die benötigte Energie über ein magnetisches oder elektromagnetisches Wechselfeld bereitstellen können. Im Falle der Verwendung von RFID-Schreib-/Lesegeräten in UHF-Technik werden dazu elektromagnetische Wechselfelder verwendet, wobei die Etikette dann eine Antenne zur Ankopplung an das elektromagnetische Wechselfeld aufweisen sollte, während bei der Verwendung von sogenannten HF-RFID-Schreib-/Lesegeräten eine magnetische Kopplung verwendet wird, wobei dann die Etikette eine Empfangsspule zur Ankopplung an das magnetische Wechselfeld benötigt.

Eine einfache Realisierung mit kommerziell verfügbaren Bauelementen ergibt sich, wenn als Steuerungseinrichtung ein gebräuchlicher RFID-Transponder verwendet wird, der über eine gebräuchliche Schnittstelle und eine Energieversorgungsleitung mit einer ebenso gebräuchlichen Anzeigeeinrichtung verknüpft wird. Dazu wird vorteilhaft ein gebräuchlicher RFID-Transponder mit einem programmierbaren Controller-Chip eingesetzt, wobei dieser Controller-Chip dann zum Datenaustausch mit der Anzeigevorrichtung programmiert werden kann.

Vorteilhaft wird der ohnehin vorhandene Energiespeicher (z.B. Kondensator) des RFID-Transponders auch zur Versorgung der Anzeigeeinrichtung mit der beim Wechsel der anzuzeigenden Information benötigten Energie verwendet. In einer alternativen Ausgestaltung kann jedoch ein zusätzlicher Energiespeicher vorgesehen werden, insbesondere in den Fällen, in denen die Anzeigevorrichtung einen hohen Energiebedarf zum Wechsel der Anzeigeinformation (darzustellende Informationen) benötigt. Optional kann eine Kontrollschaltung oder eine Kontroll-Software vorgesehen sein, die sicherstellt, dass erst dann ein Wechsel der anzuzeigenden Informationen vorgenommen werden soll, wenn der zu verwendende oder die zu verwendenden Energiespeicher einen ausreichenden Ladezustand aufweisen. Dafür kann optional eine Mindest-Zeitspanne vorgesehen werden, die sich die Etikette im versorgenden Wechselfeld befinden muss, bis das Update der Anzeige vorgenommen wird.

In einer optionalen Variante kann die Steuerungseinrichtung zur Rückmeldung über einen erfolgreichen Wechsel der anzuzeigenden Informationen auf der Anzeigevorrichtung mittels des RFID-Protokolls eingerichtet sein. Dies kann beispielsweise dadurch geschehen, dass über die interne Schnittstelle zwischen dem RFID-Transponder-Chip und der Anzeigevorrichtung eine Rückabfrage der zuvor an die Anzeigevorrichtung übermittelten Daten bzw. Informationen stattfindet, und aus diesen zurückgelesenen Daten ein Vergleich mit den im RFID-Transponder-Chip zwischengespeicherten Daten erfolgt. Der Vergleich kann alternativ auch im RFID-Schreib-/Lesegerät stattfinden; in diesem Fall werden die aus der Anzeigevorrichtung rückgelesenen Daten von der Steuerungseinrichtung zu dem Schreib-/Lesegerät ("RFID-Reader") übermittelt.

In einer vorteilhaften Ausgestaltung ist die Anzeigevorrichtung "grafikfähig", womit die Etikette dann Mittel zur Darstellung einer grafischen Information aufweist, wobei diese grafische Information insbesondere eine maschinenlesbare Ausgabe eines Nutzinhaltes oder Nutzinformation darstellt, insbesondere ein Barcode oder ein Datamatrix-Code oder ein sonstiger optisch auslesbarer Code. Ein solcher grafischer Code kann über eine Luftschnittstelle von der Steuerungseinrichtung empfangen und zur Anzeige an die Anzeigevorrichtung übertragen werden. In einer alternativen Ausgestaltung kann jedoch auch die grafische Ausgabe von der Steuerungseinrichtung erzeugt (codiert) werden, oder sogar von der Anzeigevorrichtung selbst erzeugt werden, wobei dann lediglich die zu Grunde liegenden Daten von dem Schreib-/Lesegerät an die Etikette übermittelt werden müssen. Häufig wiederkehrende grafische Informationen, beispielsweise Firmen-Logos etc., können auch in einer "Bibliothek" der Steuerungsvorrichtung oder der Anzeigevorrichtung bevorratet werden und durch einfache Übermittlung eines Steuerungscodes oder einer anderen Anweisung zur Darstellung gebracht werden. Dazu weist die Etikette dann vorteilhaft Mittel zur Auswahl oder Erzeugung der grafischen Information anhand einer empfangenen nummerischen oder alphanummerischen Information oder anhand eines empfangenen Befehls auf.

In einer vorteilhaften Ausgestaltung ist konfigurierbar, welche der Informationen über die Luftschnittstelle von der Etikette ausgelesen werden können, und welche der Informationen zur optischen Anzeige der Anzeigevorrichtung gelangen. Diese beiden Arten der Informationen sind nicht zwangsläufig gleich. So ist es beispielsweise möglich, die erfindungsgemäße Etikette zur Anzeige von Preisinformationen und einem maschinenlesbaren Barcode für Waren im Einzelhandel zu verwenden, wobei mittels eines RFID-Schreib-/Lesegerätes aus dem RFID-Chip alternative oder zusätzliche Informationen ausgelesen werden können, die nicht für den Kunden bestimmt sind, beispielsweise Informationen über einen Lieferanten oder dergleichen. Besonders vorteilhaft sind dann mittels der RFID-Technologie alle Informationen zugreifbar, die mittels der Anzeigevorrichtung dargestellt werden, aber nicht zwangsläufig umgekehrt. In anderen Fällen können auch sowohl über den RFID-Zugriff als auch über die Anzeigevorrichtung identische Informationen bereitgestellt werden.

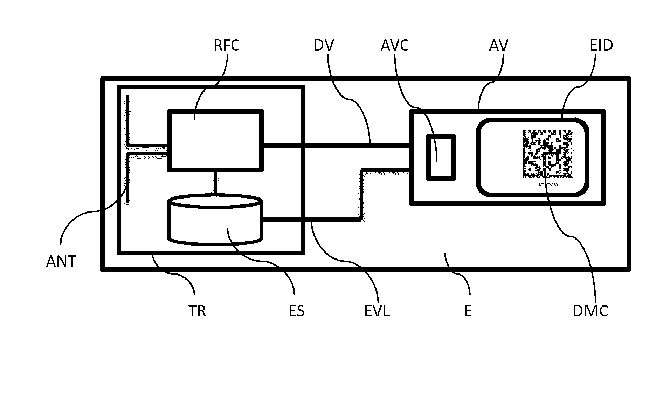

Ein Ausführungsbeispiel einer erfindungsgemäßen Etikette wird nachfolgend anhand der Zeichnung beschrieben.

Dabei zeigt die einzige Figur in einer vereinfachten schematischen Darstellung den strukturellen Aufbau einer erfindungsgemäßen Etikette.

In der Figur ist schematisch die Etikette E gezeigt, die als ein wesentliches Element die Anzeigevorrichtung AV umfasst, die wiederum hauptsächlich aus einem Anzeigevorrichtung-Controller AVC (Treiberbaustein) und einen E-Ink-Display EID (elektronisches Papier) besteht. Exemplarisch ist auf dem elektronischen Papier ein grafischer Code (Datamatrix-Code DMC) dargestellt. Ein weiteres wesentliches Element der Etikette E ist ein Transponder TR (RFID-Transponder o.ä.), der mittels einer Datenverbindung DV und einer Energieversorgungsleitung EVL mit der Anzeigevorrichtung AV verknüpft ist. Der Transponder TR besteht im Wesentlichen aus einem RFID-Chip RFC, einer Antenne ANT und einem Energiespeicher ES. In diesem Ausführungsbeispiel soll der Energiespeicher ES sowohl zur Versorgung des RFID-Chips RFC, als auch der Anzeigevorrichtung AV dienen. Der Energiespeicher ES wird dabei durch ein externes elektromagnetisches Wechselfeld (nicht dargestellt) versorgt, welches mittels der Antenne ANT empfangen und durch eine Elektronik (z.B. Gleichrichterdiode) des Transponders gleichgerichtet wird.

Zur Initiierung einer ersten Anzeige oder zum Wechsel einer anzuzeigenden Information wird die Etikette im Wirkfeld eines Schreib-/Lesegerätes (nicht dargestellt) betrieben. Der Schrieb-/Lesevorgang findet dabei analog zu der bekannten RFID-Technik statt. Dabei wird zunächst der Energiespeicher ES durch ein elektromagnetisches Wechselfeld (CW - "Continuous Wave") aufgeladen, wonach der eigentliche Datenaustausch mit dem Schreib-/Lesegerät stattfindet. Dabei werden im Wesentlichen die anzuzeigenden Informationen in einen Speicher des RFID-Chips RFC übertragen, wobei abschließend ein Befehl zum "Update" der anzuzeigenden Informationen über die Luftschnittstelle an den Transponder TR übermittelt wird. Der RFID-Chip RFC übermittelt dann die darzustellenden Informationen, beispielsweise die Bildinformation des Datamatrix-Codes DMC, über die Datenverbindung DV zu dem Treiberbaustein AVC der Anzeigevorrichtung AV. Dieser sorgt dann für eine Darstellung der anzuzeigenden Informationen, die neben dem Datamatrix-Code DMC selbstverständlich auch alphanummerische Informationen (z.B. Text) etc. umfassen können, und versetzt danach die Anzeigevorrichtung wieder in einen Ruhezustand. Durch die Funktion der persistenten Anzeige des E-Ink-Displays EID werden die derart geschriebenen Informationen nun dauerhaft optisch dargestellt.

Durch diese Etikette E ist eine nahtlose Kombination der beiden Ident-Techniken RFID und änderbare DMC/Barcode/Text-Darstellung möglich. Dabei kann etwaige vorhandene Infrastruktur von DMC-Lesegeräten und eine etwaige schon vorhandene Infrastruktur von RFID-Schreib-/Lesegeräten (RFID-Readern) weiterhin verwendet werden. Zur Reduzierung der Datenübertragung über die Luftschnittstelle ist es dabei möglich, einen optischen Code (Barcode, DMC-Code) lokal mittels der Etikette zu erzeugen und anzuzeigen, wobei dann über die Luftschnittstelle nur die zu Grunde liegenden Rohdaten übermittelt werden müssen. Bei der Verwendung der Etikette in einer Produktions-Logistik kann beispielsweise ein "User-Memory" des integrierten RFID-Transponders dynamische Fertigungs- oder Transportdaten des jeweiligen Produktes enthalten, die an jeder Verarbeitungsstation neu geschrieben und auch jederzeit gelesen werden können, während statische Informationen nur einmalig geschrieben werden müssen, und dann permanent zur Verfügung stehen. Insbesondere ist es auch möglich, getrennte Inhalte für die optische Darstellung und für die Bereitstellung mittels RFID-Luftschnittstelle zu definieren.

## Patentansprüche

1. Etikette (E) zur optischen Darstellung wechselnder Informationen, insbesondere von elektronischen Produktinformationen,
mit einer passiven optoelektronischen Anzeigevorrichtung (AV), wobei die passive Anzeigevorrichtung zur dauerhaften energielosen Aufrechterhaltung einer dargestellten Information eingerichtet ist, und
mit einer Steuerungseinrichtung zur Bereitstellung geänderter Informationen für die Anzeigevorrichtung (AV), **dadurch gekennzeichnet,**
**dass** die Steuerungseinrichtung nach Art eines RFID-Transponders zum Empfang der darzustellenden Informationen von einem Schreib-/Lesegerät eingerichtet ist, und dass die Etikette (E) mittels zumindest eines Energiespeichers (ES), der aus einem empfangenen Wechselfeld aufladbar ist, mit Energie versorgbar ist.

2. Etikette (E) nach Patentanspruch 1,
**dadurch gekennzeichnet,**
**dass** die Anzeigevorrichtung (AV) im Wesentlichen aus einem elektronischen Papier (EID) besteht.

3. Etikette (E) nach Patentanspruch 1 oder 2,
**dadurch gekennzeichnet,**
**dass** die Steuerungseinrichtung der Etikette (E) zum Datenaustausch mit einem Schreib-/Lesegerät mittels eines RFID-Protokolls eingerichtet ist.

4. Etikette (E) nach Patentanspruch 3,
**dadurch gekennzeichnet,**
**dass** die Steuerungseinrichtung im Wesentlichen aus einem mittels einer Schnittstelle mit der Anzeigevorrichtung (AV) verbundenen RFID-Transponder (TR) besteht.

5. Etikette (E) nach Patentanspruch 4,
**dadurch gekennzeichnet,**
**dass** ein Energiespeicher (ES) des RFID-Transponders (TR) auch zur Versorgung der Anzeigevorrichtung (AV) mit der beim Wechsel der anzuzeigenden Information benötigten Energie eingerichtet ist.

6. Etikette (E) nach einem der Patentansprüche 3 bis 5,
**dadurch gekennzeichnet,**
**dass** die Steuerungseinrichtung zur Rückmeldung über einen erfolgreichen Wechsel der anzuzeigenden Informationen auf der Anzeigevorrichtung (AV) mittels des RFID-Protokolls eingerichtet ist.

7. Etikette (E) nach einem der vorhergehenden Patentansprüche,
**dadurch gekennzeichnet,**
**dass** die Etikette (E) Mittel zur Darstellung einer graphischen Information (DMC) aufweist.

8. Etikette (E) nach Patentanspruch 7,
**dadurch gekennzeichnet,**
**dass** als die graphische Information (DMC) ein maschinenlesbarer optischer Code, insbesondere ein Barcode oder ein quadratischer Code, darstellbar ist.

9. Etikette (E) nach Patentanspruch 7 oder 8,
**dadurch gekennzeichnet,**
**dass** die Etikette Mittel zur Auswahl oder Erzeugung der graphischen Information (DMC) anhand einer empfangenen numerischen oder alphanumerischen Information aufweist.

10. Etikette (E) nach einem der vorhergehenden Patentansprüche,
**dadurch gekennzeichnet,**
**dass** die Etikette (E) derart eingerichtet ist, dass ein erster Teil der über eine Luftschnittstelle empfangenen Informationen zumindest für die Darstellung auf der Anzeigevorrichtung (AV) vorgesehen ist, und ein zweiter Teil der Informationen zum Abruf über die Luftschnittstelle mittels eines Schreib-/Lesegerätes speicherbar ist.

11. Etikette (E) nach Patentanspruch 10,
**dadurch gekennzeichnet,**
**dass** der zweite Teil der Informationen auch den ersten Teil der Informationen umfasst oder beide Teile der Informationen identisch sind.
